# FASCICULE DE BREVET EUROPEEN

(11) **EP 3 350 257 B1**
(45) Date de publication et mention de la délivrance du brevet: **04.06.2025**
(21) Numéro de dépôt: 16785189.8
(22) Date de dépôt: 15.09.2016
(51) Int. Cl.: C08K 5/3415, B01D 71/54, B01D 71/68, C08K 5/41, C08L 75/04, C08L 81/06, D06N 3/12, C08J 3/09

(54) **COMPOSITION DE SOLVANT(S) COMPRENANT UN MÉLANGE D'UNE MOLÉCULE AYANT UNE FONCTION SULFOXYDE ET D'UNE MOLÉCULE AYANT UNE FONCTION AMIDE**
LÖSUNGSMITTELZUSAMMENSETZUNG MIT EINER MISCHUNG AUS EINEM MOLEKÜL MIT EINER SULFOXIDFUNKTION UND EINEM MOLEKÜL MIT EINER AMIDFUNKTION
SOLVENT COMPOSITION COMPRISING A MIXTURE OF A MOLECULE HAVING A SULPHOXIDE FUNCTION AND A MOLECULE HAVING AN AMIDE FUNCTION

(30) Priorité: 15.09.2015 FR 1558600
(43) Date de publication de la demande: 25.07.2018
(73) Titulaire: Gaylord Chemical Company LLC, Slidell LA 70458 (US)
(72) Inventeur: SCHMITT, Paul Guillaume, 64230 Lescar (FR)
(74) Mandataire: Ter Meer Steinmeister & Partner
(86) Numéro de dépôt international: PCT/FR2016/052337
(87) Numéro de publication internationale: WO 2017/046533

(56) Documents cités:
- CN-A- 101 709 178
- CN-A- 101 724 311
- JP-A- H01 266 811
- JP-A- S61 212 305
- US-A- 3 527 653
- DATABASE WPI Week 198137, Derwent World Patents Index; AN 1981-67339D, XP002759764

## Description

### DOMAINE DE L'INVENTION

L'invention concerne l'utilisation d'une composition de solvant(s) pour stabiliser des solutions polymériques, lesdites solutions polymériques étant utilisables notamment pour la fabrication de films, de membranes, de cuirs artificiels, de daim polymériques, de fibres polymériques, de revêtements, de circuits électroniques, de batteries, notamment lithium-ion (Li-ion), ou pour la protection de câbles électriques par gainage. Décrite en outre est une solution de polymère(s) et une membrane de filtration obtenue à partir de la solution de polymère(s).

### ARRIÈRE-PLAN TECHNIQUE

Les films polymériques ou fibres creuses de polymère peuvent être utilisés dans diverses applications, telles que le revêtement des textiles, notamment cuirs artificiels, daim des chaussures ou équipements de protection individuel ; les batteries, notamment batteries Li-ion ; les membranes, notamment pour le traitement de l'eau ou la dialyse ; les protections de câbles électriques par gainage ; les circuits électroniques.

Parmi les polymères qui peuvent être utilisés dans ces applications, on peut citer les polyuréthanes (PU), polysulfones (PSU), polyfluorures de vinylidène (PVDF), polyéthersulfones (PES), polyphénylsulfones (PPSU) l'acétate de cellulose, les polyamide-imides (PAI) ou les polyimides (PI), cette liste n'étant pas limitative.

Les procédés de fabrications de ces films ou fibres de polymère comprennent de nombreuses étapes, parmi lesquelles on peut citer :
- synthèse du polymère en milieu solvant,
- dissolution du polymère dans un solvant dans le cas où le polymère issu de la synthèse est introduit sous forme solide (par exemple sous forme extrudé ou de billes) afin d'obtenir une solution polymérique,
- réalisation d'un film par un procédé d'enduction de la solution polymérique suivi d'un séchage (traitement thermique : dry process) pour évaporer le solvant,
cette étape pouvant aussi être substituée par une étape de :
- réalisation d'un film ou d'une fibre creuse par un procédé d'imprégnation sur un support ou de filage de la solution polymérique suivi d'une trempe dans un tiers solvant (eau par exemple) permettant de précipiter le polymère et de faire migrer le solvant de la solution polymérique vers le tiers solvant (coagulation: wet process).

Le procédé peut en outre comprendre :
- éventuellement recyclage du solvant,
- éventuellement envoi des solutions aqueuses générées dans des stations de traitement des eaux usées.

Actuellement, les solvants couramment utilisés pour la fabrication de ces films ou fibres creuses de polymère sont des solvants aprotiques polaires, tels que la NMP (N-méthyl-pyrrolidone), la DMF (diméthylformamide) et la DMAc (diméthylacétamide). Ces solvants présentent néanmoins de nombreux inconvénients toxicologiques car ils sont classés CMR (cancérigène-mutagène-reprotoxique) et toxique.

Il existe donc un intérêt à substituer ces solvants par des solvants présentant un meilleur profil toxicologique.

Des alternatives à ces solvants toxiques ont été proposées.

Le document WO 2005/090447 propose de substituer la NMP par la N-éthyl-2-pyrrolidone (NEP). La NEP est désormais classée reprotoxique par l'Union Européenne.

Dans le document WO 2008/012231, il est proposé de remplacer la NMP par la 1,5-diméthylpyrrolidone (DMP). Des études de reprotoxicité ont indiqué que la DMP est suspectée d'être reprotoxique au même titre que la NMP.

Plus récemment, le document WO 2013/107822 propose de substituer partiellement ou totalement des solvants toxiques, tels que la NMP, DMF ou la DMACs par un solvant choisi parmi la N-butylpyrrolidone, N-isobutylpyrrolidone, N-t-butylpyrrolidone, N-n-pentylpyrrolidone, N-(méthyl-substitué butyl)pyrrolidone, N-propyl- ou N-butyl pyrrolidone dont le noyau est méthyl-substitué ou la N-(methoxypropyl)pyrrolidone.

Il a également été proposé d'utiliser le diméthylsulfoxyde (DMSO) comme solvant pour la fabrication de films ou fibres creuses de polymère.

L'utilisation de DMSO et de 2-pyrrolidone seuls posent des problèmes de stabilité des solutions polymériques, ce qui rend un procédé industriel très difficile, voire impossible à mettre en œuvre sans adaptation significative du procédé. Le DMSO ou la 2-pyrrolidone permettent de dissoudre les polymères tels que les polyuréthanes ou les polysulfones en chauffant ces solutions à environ 50°C pendant plusieurs heures mais les solutions polymériques obtenues gélifient, voire se solidifient, rapidement après retour à des températures de travail de l'ordre de 0 à 20°C.

Il n'existe pas à ce jour de compositions de solvants, non classés CMR, permettant à la fois de dissoudre les polymères et d'obtenir des solutions polymériques stables, en particulier à basse température (température de l'ordre de 0°C par exemple), sur une période pouvant aller de quelques jours jusqu'à plusieurs semaines (3 semaines par exemple). En effet, pour obtenir une solution industrielle, il faut que les solutions polymériques soient stables et ne gélifient pas pendant quelques heures, voire quelques semaines permettant ainsi de surmonter les aléas d'une production industrielle (arrêt d'unité, problème de chauffage des ateliers, etc), et le problème de stockage, et ce à des températures pouvant atteindre 0°C par exemple.

Le document JP1266811 propose une membrane à fibres creuses obtenue en mélangeant une polyéthersulfone, du DMSO, de la 2-pyrrolidone et un polyéthylène glycol de masse moléculaire moyenne de 200 (PEG 200). Ce document enseigne que la 2-pyrrolidone permet d'augmenter la perméabilité de la membrane à fibres creuses ainsi que la tenue mécanique. La 2-pyrrolidone, tout comme les Poly Ethylene Glycol 4 (PEG) ou les Poly Vinyl Pyrrolidone (PVP), sert donc à améliorer la perméation de la membrane. Il est connu que l'ajout d'agents porogènes permet de modifier la structure des pores des membranes et ainsi la perméation. On peut citer par exemple l'article Desalination 207 (2007),324-339 "Synthesis, characterization and performance of asymmetric polyethersulfone (PES) ultrafiltration membranes with polyethylene glycol of different molecular weights as additives*"* ainsi que l'article Physics and Chemistry of the Earth 67-69 (2014), 125-131 "Preparation of antifouling polyvinylpyrrolidone modified polyethersulfone ultrafiltration membrane for water purification*".* Le document JP1266811 ne mentionne aucunement le problème de la stabilité des solutions polymériques et il ne décrit pas la composition de solvant(s) selon la présente invention.
SU 789467 A1 décrit une composition d'hydrocarbures comprenant du diméthylsulfoxyde et un epsilon-caprolactame en tant que solvants d'extraction.
JP S61 212305 A décrit une résine composée de polysulfones aromatiques, solubilisée dans un solvant tel que la 2-pyrrolidone, le diméthylacétamide ou le diméthylsulfoxyde. Un composé présentant une fonction carboxyle est ajouté à la solution.
US 3,527,653 A décrit un procédé de fabrication de cuir artificiel à base de polyuréthane à l'aide d'un solvant pouvant être le diméthylformamide ou le diméthylsulfoxyde. CN 101 724 311 A décrit une composition décaptante pour peinture comprenant, entre autres, de l'alpha-pyrrolidone, du diméthylsulfoxyde et de la carboxyméthyl cellulose. CN 101 709 178 A décrit des compositions d'encre pour imprimante à jet d'encre possédant une bonne stabilité de stockage et comprenant, entre autres, une résine telle que du polyuréthane, de la 2-pyrrolidone et du diméthylsulfoxyde.

### RÉSUMÉ DE L'INVENTION

Décrite ici est en premier lieu une composition de solvant(s) comprenant un mélange d'au moins une molécule ayant au moins une fonction sulfoxyde et d'au moins une molécule ayant au moins une fonction amide où l'atome d'azote porte un atome d'hydrogène (-NH-C(O)-), ladite composition étant substantiellement exempte de polyéthersulfones. Par « substantiellement exempte de polyéthersulfones », on entend que ladite composition peut contenir une ou plusieurs polyéthersulfones, en quantité inférieure à 1% en poids, de préférence inférieure à 0,5% en poids, par rapport au poids total de la composition.

En particulier, la composition de solvant(s) décrite ici est substantiellement exempte de polymères. Par « substantiellement exempte de polymères », on entend que ladite composition de solvant(s) peut contenir un ou plusieurs polymères, en quantité inférieure à 1% en poids, de préférence inférieure à 0,5% en poids, par rapport au poids total de la composition.

De préférence, la molécule portant la fonction amide est cyclique. De préférence, la molécule portant une fonction amide est la 2-pyrrolidone. De préférence, la molécule portant une fonction amide n'est pas le epsilon-caprolactame

De préférence, la molécule portant une fonction sulfoxyde est le diméthylsulfoxyde.

La composition de solvant(s) décrite ici peut comprendre du diméthylsulfoxyde et de la 2-pyrrolidone.

La composition de solvant(s) décrite ici peut comprendre :
- de 21 à 75% en poids, de préférence de 25 à 70% en poids, de préférence encore de 30 à 65% en poids de la molécule portant une fonction sulfoxyde,
- de 25 à 80% en poids, de préférence de 30 à 75% en poids, de préférence encore de 35 à 70% en poids de la molécule portant une function amide où l'atome d'azote porte un atome d'hydrogène,
par rapport au poids total de la composition.

La composition décrite ici peut comprendre en outre au moins un autre co-solvant, de préférence choisi parmi l'eau, les cétones, les amines, les alcools, les éthers, les esters, les sulfones, les aromatiques, les acétals ou parmi la N-butylpyrrolidone, la N-isobutylpyrrolidone, la N-t-butylpyrrolidone, la N-n-pentylpyrrolidone, la N-(méthyl-substitué butyl)pyrrolidone, la N-propyl- ou N-butyl pyrrolidone dont le noyau est méthylsubstitué ou la N-(méthoxypropyl)pyrrolidone, la dipropylène glycol diméthyl éther (DPGDME), le polyglyme, l'éthyl diglyme, le 1,3-dioxolane, le méthyl-5(dimethylamino)-2-méthyl-5-oxopentanoate.

L'invention concerne l'utilisation de la composition de solvant(s) décrite ci-dessus pour améliorer la stabilité de solutions de polymères. En particulier, l'invention concerne l'utilisation d'une composition de solvant(s) pour améliorer la stabilité de solutions de polymères, dans laquelle la solution de polymères est une solution de polysulfone ou de polyéthersulfone ou de polyphénylsulfone, de préférence une solution de polysulfone,
la composition de solvant(s) comprenant un mélange d'au moins une molécule ayant au moins une fonction sulfoxyde et d'au moins une molécule ayant au moins une fonction amide où l'atome d'azote porte un atome d'hydrogène (-NH-C(O)-),
la molécule portant une fonction amide n'étant pas l'epsilon-caprolactame et
ladite composition contenant une ou plusieurs polyéthersulfone(s), en quantité inférieure à 1% en poids, par rapport au poids total de la composition.

Les solutions de polymères sont des solutions de polymères ayant des fonctions sulfone.

La solution de polymère est une solution de polysulfone ou de polyéthersulfone ou de polyphénylsulfone, de préférence une solution de polysulfone.

Décrite ici est également une solution de polymère(s), ladite solution comprenant une composition de solvant(s) comprenant un mélange d'au moins une molécule ayant au moins une fonction sulfoxyde et d'au moins une molécule ayant au moins une fonction amide où l'atome d'azote porte un atome d'hydrogène (-NH-C(O)-), ladite solution de polymères étant substantiellement exempte de polyéthersulfones. Par « substantiellement exempte de polyéthersulfones », on entend que ladite solution de polymère(s) peut contenir une ou plusieurs polyéthersulfones, en quantité inférieure à 1% en poids, de préférence inférieure à 0,5% en poids, par rapport au poids total de ladite solution.

De préférence, le polymère de la solution de polymère(s) présente des fonctions sulfone ou uréthane.

De préférence, la solution de polymères comprend une composition de solvant(s) telle que définie ici.

La solution de polymères peut comprendre :
- de 5 à 50% en poids, de préférence de 8 à 35% en poids de polymères, et
- de 50 à 95% en poids, de préférence de 65 à 92% en poids de la composition de solvant(s),
par rapport au poids total de la solution de polymères.

Décrite ici est également une membrane de filtration obtenue à partir de la solution de polymères décrite ici.

L'invention concerne également l'utilisation d'une solution de polymère(s) pour la fabrication de cuirs artificiels. En particulier, l'invention concerne l'utilisation d'une solution de polymère(s) pour la fabrication de cuirs artificiels, ladite solution de polymère(s) comprenant une composition de solvants comprenant un mélange d'au moins une molécule ayant au moins une fonction sulfoxyde et d'au moins une molécule ayant au moins une fonction amide où l'atome d'azote porte un atome d'hydrogène (-NH-C(O)-), ladite solution de polymère(s) contenant une ou plusieurs polyéthersulfone(s), en quantité inférieure à 1% en poids, par rapport au poids total de la composition.

Décrite ici est également l'utilisation de la solution de polymères décrite ici, pour la fabrication de films, de daim polymériques, de fibres polymériques, de revêtement, de membranes, de batteries, de circuits électroniques, ou pour la protection de câbles électriques.

La composition de solvant(s) utilisée selon la présente invention permet de stabiliser des solutions polymériques, et ceci dans une large gamme de température, en particulier aux basses températures. La présente invention permet de fournir une unique composition de solvant(s) présentant un caractère universel et permettant de stabiliser des polymères très variés, à savoir aussi bien des polyuréthanes, des polyéthersulfones et des polysulfones.

Les solutions polymériques décrites ici sont stables, à température ambiante et/ou à basse température, et sur une période allant jusqu'à plusieurs semaines.

Le ou les solvant(s) utilisés ne sont pas ou peu toxiques. En particulier, les solvant(s) utilisés ne sont pas classés CMR.

### DESCRIPTION DE MODES DE RÉALISATION DE L'INVENTION

L'invention est maintenant décrite plus en détail et de façon non limitative dans la description qui suit.

Décrite ici est une composition de solvant(s) comprenant un mélange d'au moins une molécule ayant au moins une fonction sulfoxyde et d'au moins une molécule ayant au moins une fonction amide où l'atome d'azote porte un atome d'hydrogène (-NH-C(O)-), ladite composition étant substantiellement exempte de polyéthersulfones, de préférence totalement exempte de polyéthersulfones. Les deux molécules (celle portant la fonction sulfoxyde et celle portant la fonction amide) sont distinctes l'une de l'autre.

La molécule portant la fonction sulfoxyde peut par exemple comprendre de 2 à 24 atomes de carbone, de préférence de 2 à 12 atomes de carbone, de préférence encore de 2 à 6 atomes de carbone.

La molécule portant la fonction amide peut par exemple comprendre de 2 à 24 atomes de carbone, de préférence de 2 à 12 atomes de carbone, de préférence encore de 2 à 6 atomes de carbone, de préférence encore de 2 à 5, de manière tout à fait préférée 2, 3 ou 4 atomes de carbone.

De préférence, la ou les molécules présentant au moins une fonction sulfoxyde présentent une seule fonction sulfoxyde.

De préférence, la ou les molécules présentant au moins une fonction amide présentent une seule fonction amide.

La composition de solvant(s) peut consister essentiellement, et de préférence exclusivement, en des molécules portant une fonction sulfoxyde et des molécules portant une fonction amide où l'atome d'azote porte un atome d'hydrogène (-NH-C(O)-).

La composition de solvant(s) décrite ici est substantiellement exempte de polymères, de préférence totalement exempte de polymères, en particulier de polymères de type polyéthersulfones.

Par « polymères », au sens de la présente invention, on entend toutes molécules présentant au moins deux motifs (monomères) identiques reliés par une liaison covalente. Le polymère selon la présente invention peut être d'origine naturelle ou synthétique, pouvant être obtenu par polymérisation, polycondensation ou polyaddition.

De préférence, la molécule ayant au moins une fonction amide est cyclique, en particulier, la fonction amide est une fonction amide cyclique. De préférence encore la molécule ayant au moins une fonction amide est la 2-pyrrolidone.

De préférence, la molécule portant une fonction sulfoxyde est le diméthylsulfoxyde (DMSO).

En particulier, la composition de solvant(s) comprend du DMSO et de la 2-pyrrolidone. La composition de solvant(s) décrite ici peut consister essentiellement, et de préférence exclusivement, en du DMSO et de la 2-pyrrolidone.

De préférence, la composition de solvant(s) décrite ici comprend :
- de 21 à 75% en poids, de préférence de 25 à 70% en poids, de préférence encore de 30 à 65% en poids de molécule(s) portant une fonction sulfoxyde,
- de 25 à 79% en poids, de préférence de 30 à 75% en poids, de préférence encore de 35 à 70% en poids de molécule(s) portant une fonction amide où l'atome d'azote porte un atome d'hydrogène,
par rapport au poids total de la composition de solvant(s).

La composition de solvant(s) peut consister essentiellement, et de préférence exclusivement, en :
- de 21 à 75% en poids, de préférence de 25 à 70% en poids, de préférence encore de 30 à 65% en poids de molécule(s) portant une fonction sulfoxyde,
- de 25 à 79% en poids, de préférence de 30 à 75% en poids, de préférence encore de 35 à 70% en poids de molécule(s) portant une fonction amide où l'atome d'azote porte un atome d'hydrogène,
par rapport au poids total de la composition de solvant(s).

Le ratio massique entre la/les molécules portant au moins une fonction sulfoxyde et la/les molécules portant au moins une fonction amide peut aller de 90/10 à 10/90, de préférence de 80/20 à 20/80, de préférence encore de 70/30 à 30/70, plus préférentiellement de 60/40 à 40/60.

La composition de solvant(s) peut comprendre environ 50% en poids de DMSO et environ 50% en poids de 2-pyrrolidone, par rapport au poids total de la composition de solvant(s).

La composition de solvant(s) peut comprendre en outre au moins un autre solvant, différent des deux molécules décrites ci-dessus. On peut citer à titre non limitatif comme exemple d'autres solvants:
- l'eau ;
- les cétones, telles que l'acétone, la méthyléthylcétone (MEK), la méthylisobutylcétone, l'hexanone, la cyclohexanone, l'éthylaminecétone, l'isophorone, la triméthylcyclohexanone, la gamma-butyrolactone, l'alcool diacétone ;
- les amines, telles que la monoéthanolamine (MEoA), la diéthanolamine (DEoA), la propanolamine (PoA), la butyl-iso-propanol-amine (BiPoA), l'isopropanolamine (iPoA), la 2-[2-(3-amino-propoxy)éthoxy]éthanol, la N-2-hydroxyéthyldiéthylènetriamine, la (3-méthoxy)-propylamine (MoPA), la 3-isopropoxypropylamine (IPOPA), la monoéthylamine, la diéthylamine, la diéthylaminopropylamine (DEAPA), la triéthylamine (TEA), l'acetonitrile ;

- les alcools, tels que l'éthanol, le méthanol, le propanol, l'isopropanol, le glycerol, l'alcool diacétone, le butanol, le méthylisobutylcarbinol, l'hexylèneglycol, l'alcool benzylique ;
- les éthers, tels que le tétrahydrofurane (THF), le méthyl furane, le méthyl tétrahydrofurane, le tétrahydropyrane, le glycoldialkyléther ;
- les esters, tels que les esters dibasiques, le diméthylglutarate, le diméthylsuccinate, le diméthyladipate, le butylacétate, l'éthylacétate, le diéthylcarbonate, le diméthylcarbonate, le propylène carbonate, l'éthylméthylcarbonate, le glycérolcarbonate, le diméthyl-2-méthylglutarate, le diméthyl-2-méthyladipate, le diméthyl-2-méthylsuccinate, le N-butylpropionate, le Benzyl acétate, l'éthyléthoxypropionate ;
- les sulfones, tels que le diméthylsulfone, le sulfolane;
- les aromatiques, tels que le toluène, le xylène ;
- les acétals, tels que le méthylal, l'éthylal, le butylal, le dioxolane, TOU (tétraoxaundécane) ;
- Les éthers de glycol de type E ou P, tels que le dipropylène glycol diméthyl éther (DPGDME), le dipropylène glycol méthyl éther.

À titre d'exemples d'autre solvant, on peut également citer les solvants suivants : N-butylpyrrolidone, N-isobutylpyrrolidone, N-t-butylpyrrolidone, N-n-pentylpyrrolidone, N-(méthyl-substitué butyl)pyrrolidone, N-propyl- ou N-butyl pyrrolidone dont le noyau est méthyl-substitué ou la N-(methoxypropyl)pyrrolidone, polyglyme, éthyl diglyme, 1,3-dioxolane, methyl-5-(diméthylamino)-2-méhyl-5-oxopentanoate.

La composition de solvant(s) peut comprendre en outre au moins un agent porogène, tel qu'un PEG ou la PVP.

La présente invention concerne l'utilisation de la composition de solvant(s) décrite ici pour améliorer la stabilité des solutions de polymères comme définie dans les revendications 1-6.

Les solutions de polymères ou solutions polymériques sont obtenues par dissolution ou dispersion des polymères dans la composition de solvant(s) décrite ici.

Les solutions polymériques ou solutions de polymères peuvent être choisies parmi les solutions de polyuréthane, les solutions de polysulfone, les solutions de polyphénylsulfone, les solutions de polyéthersulfone, les solutions de polyfluorures de vinylidène (PVDF), l'acétate de cellulose, les polyamide-imides (PAI) ou les polyimides (PI).

De préférence, les solutions de polymères sont des solutions de polymères ayant des fonctions sulfone ou uréthane. Selon l'invention, les solutions de polymères sont choisies parmi les solutions de polyphénylsulfone, les solutions de polyéthersulfone, et les solutions de polysulfone, en particulier parmi les solutions de polysulfone.

Par « polysulfone », au sens de la présente invention, on entend un polymère présentant au moins deux motifs (n ≥ 2) de formule :

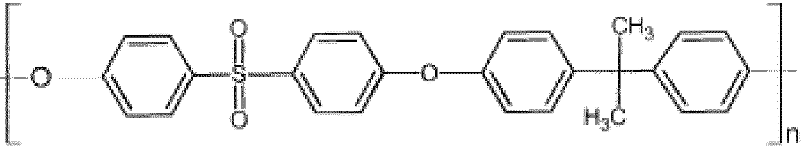

Par « polyéthersulfone », au sens de la présente invention, on entend un polymère présentant au moins deux motifs (n ≥ 2) de formule :

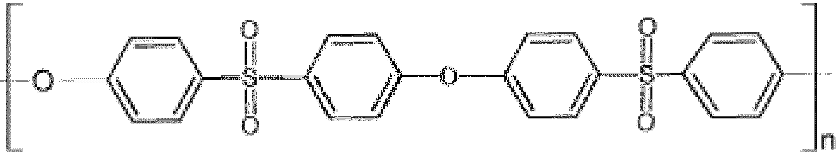

Par « polyphénylsulfone », au sens de la présente invention, on entend un polymère présentant au moins deux motifs (n ≥ 2) de formule :

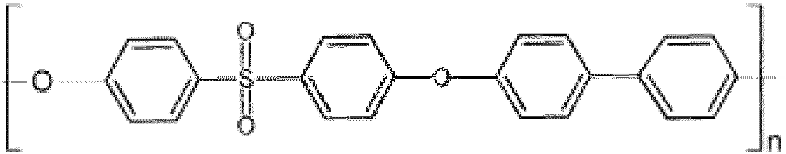

Au sens de la présente invention, une polyéthersulfone n'est pas une polysulfone.

Les compositions de solvant(s) utilisées selon la présente invention permettent effectivement d'améliorer la stabilité des solutions polymériques à température ambiante (température allant de 20°C à 30°C, de préférence environ 25°C) ou à basse température (température allant de -10°C à +10°C, de préférence environ 0°C), de préférence la stabilité est améliorée aussi bien à température ambiante qu'à basse température.

Les compositions de solvant(s) utilisées selon la présente invention permettent d'améliorer la stabilité au stockage des solutions polymériques, en particulier pour une durée de stockage pouvant varier de quelques heures à plusieurs semaines.

L'amélioration de la stabilité des solutions peut se caractériser par l'obtention d'une solution liquide, au contraire d'un solide ou d'un gel. L'amélioration peut également se caractériser par un aspect transparent ou très légèrement coloré au contraire d'un aspect trouble. L'amélioration de la stabilité peut être évaluée immédiatement après préparation des solutions ou bien après une durée prolongée, par exemple allant de 1 jour à 3 semaines.

Décrite ici est également une solution de polymères, ladite solution comprenant une composition de solvant(s) comprenant un mélange d'au moins une molécule présentant au moins une fonction sulfoxyde et d'au moins une molécule présentant au moins une fonction amide où l'atome d'azote porte un atome d'hydrogène (-NH-C(O)-), ladite solution étant substantiellement exempte de polyéthersulfones. Les deux molécules (celle portant la fonction sulfoxyde et celle portant la fonction amide) sont distinctes l'une de l'autre.

De préférence, la solution de polymères décrite ici est totalement exempte de polyéthersulfones.

De préférence, la solution de polymères décrite ici est une solution de polymère ayant des fonctions sulfone ou uréthane, étant entendu que ladite solution est substantiellement, en particulier totalement exempte, de polyéthersulfones.

La solution de polymères décrite ici peut comprendre un polysulfone et/ou un polyuréthane et/ou un polyphénylsulfone.

En préférence, la solution de polymères décrite ici est une solution de polysulfone.

Selon un mode de réalisation de l'invention, la composition de solvant(s) de la solution de polymères utilisée selon l'invention consiste essentiellement en des molécules portant une fonction sulfoxyde et des molécules portant une fonction amide où l'atome d'azote porte un atome d'hydrogène (-NH-C(O)-).

De préférence, la molécule portant une fonction amide est cyclique, en particulier, la fonction amide peut être une fonction amide cyclique. De préférence encore la molécule portant la fonction amide est la 2-pyrrolidone.

De préférence, la molécule portant une fonction sulfoxyde est le diméthylsulfoxyde (DMSO).

Selon un mode de réalisation particulier, la composition de solvant(s) de la solution de polymères comprend du DMSO et de la 2-pyrrolidone. Selon un mode de réalisation, la composition de solvant(s) de la solution de polymères selon l'invention consiste essentiellement, et de préférence exclusivement, en du DMSO et de la 2-pyrrolidone.

Selon un mode de réalisation, la composition de solvant(s) de la solution de polymères comprend :
- de 21 à 75% en poids, de préférence de 25 à 70% en poids, de préférence encore de 30 à 65% en poids de la molécule portant une fonction sulfoxyde,
- de 25 à 79% en poids, de préférence de 30 à 75% en poids, de préférence encore de 35 à 70% en poids de la molécule portant une fonction amide où l'atome d'azote porte un atome d'hydrogène,
par rapport au poids total de la composition de solvant(s).

Selon un mode de réalisation, la composition de solvant(s) de la solution de polymères consiste essentiellement, et de préférence exclusivement, en :
- de 21 à 75% en poids, de préférence de 25 à 70% en poids, de préférence encore de 30 à 65% en poids de la molécule portant une fonction sulfoxyde,
- de 25 à 80% en poids, de préférence de 30 à 75% en poids, de préférence encore de 35 à 70% en poids de la molécule portant une fonction amide où l'atome d'azote porte un atome d'hydrogène,
par rapport au poids total de la composition de solvant(s).

La solution de polymères peut comprendre :
- de 5 à 50% en poids, de préférence de 8 à 35% en poids de polymères, et
- de 50 à 95% en poids, de préférence de 65 à 92% en poids de la composition de solvant(s),
par rapport au poids total de la solution.

La solution de polymères peut consister essentiellement en :
- de 5 à 50% en poids, de préférence de 8 à 35% en poids de polymères, et
- de 50 à 95% en poids, de préférence de 65 à 92% en poids de la composition de solvant(s),
par rapport au poids total de la solution.

La solution de polysulfone peut comprendre :
- de 5 à 50% en poids, de préférence de 8 à 35% en poids de polysulfone, et
- de 50 à 95% en poids, de préférence de 65 à 92% en poids de la composition de solvant(s),
par rapport au poids total de la solution.

La solution de polysulfone peut consister essentiellement en :
- de 5 à 50% en poids, de préférence de 8 à 35% en poids de polysulfone, et
- de 50 à 95% en poids, de préférence de 65 à 92% en poids de la composition de solvant(s),
par rapport au poids total de la solution.

La solution de polyuréthane peut comprendre :
- de 5 à 50% en poids, de préférence de 8 à 35% en poids de polyuréthane, et
- de 50 à 95% en poids, de préférence de 65 à 92% en poids de la composition de solvant(s),
par rapport au poids total de la solution.

La solution de polyuréthane peut consister essentiellement en :
- de 5 à 50% en poids, de préférence de 8 à 35% en poids de polyuréthane, et
- de 50 à 95% en poids, de préférence de 65 à 92% en poids de la composition de solvant(s),
par rapport au poids total de la solution.

Décrite ici est également une membrane de filtration obtenue à partir de la solution de polymères décrite ici.

De préférence, la membrane de filtration est une membrane à fibres creuses pouvant être utilisée de manière non limitative pour le traitement de l'eau ou pour les dialyses.

De préférence, la membrane décrite ici est obtenue à partir de la solution de polysulfone décrite ici.

La membrane de filtration décrite ici peut être obtenue selon un procédé bien connu de l'homme du métier.

La membrane de filtration peut être obtenue par un procédé comprenant :
- fourniture d'un polymère, de préférence un polysulfone,
- dissolution du polymère dans la composition de solvant(s) décrite ici comprenant un mélange d'au moins une molécule ayant une function sulfoxyde et d'au moins une molécule ayant au moins une fonction amide où l'atome d'azote porte un atome d'hydrogène (-NH-C(O)-) afin d'obtenir la solution de polymères, de préférence de polysulfone, décrite ici
- réalisation d'une fibre creuse par un procédé de filage de la solution polymérique suivi d'une trempe dans un tiers solvant (eau par exemple) permettant de précipiter le polymère et de faire migrer le solvant de la solution polymérique vers le tiers solvant (coagulation: wet process),
- éventuellement recyclage du solvant,
- éventuellement envoi des solutions aqueuses générées dans des stations de traitement des eaux usées.

L'invention concerne également l'utilisation d'une solution de polymère(s) décrite ci-dessus pour la fabrication d'un cuir artificiel comme définie dans les revendications 7-10.

Il est décrit en outre, que le cuir artificiel est obtenu à partir de la solution de polyuréthane décrite ici.

Le cuir artificiel fabriqué selon l'invention peut être obtenu selon un procédé bien connu de l'homme du métier.

Le cuir artificiel peut être obtenu par un procédé comprenant :
- synthèse du polymère, de préférence un polyuréthane, en milieu solvant afin d'obtenir un polymère sous forme solide ou sous forme de résine contenant le polymère et du solvant,
- dissolution du polymère sous forme solide ou résine dans la composition de solvant(s) décrite ci-dessus comprenant un mélange d'au moins une molécule ayant une fonction sulfoxyde et d'une molécule ayant au moins une fonction amide où l'atome d'azote porte un atome d'hydrogène (-NH-C(O)-) afin d'obtenir la solution de polymères, de préférence de polyuréthane, décrite ici
- réalisation d'un film par un procédé d'enduction de la solution polymérique suivi d'un séchage (traitement thermique : dry process) pour évaporer le solvant,

Cette étape pouvant aussi être substituée par une étape de :
- réalisation d'un film par un procédé d'imprégnation sur un support de la solution polymérique suivi d'une trempe dans un tiers solvant (eau par exemple) permettant de précipiter le polymère et de faire migrer le solvant de la solution polymérique vers le tiers solvant (coagulation: wet process),
- éventuellement recyclage du solvant,
- éventuellement envoi des solutions aqueuses générées dans des stations de traitement des eaux usées.

Décrite ici est également l'utilisation de la solution de polymères décrite ici, pour la fabrication d'articles tels que films, daim polymériques, fibres polymériques, revêtements, membranes, batteries, circuits électroniques, ou pour la protection de câbles électriques.

### EXEMPLES

Différentes solutions polymériques ont été préparées et leur stabilité a été évaluée.

Les polymères utilisés sont les suivants :
- Polyuréthane (PU) : Desmoderm^{®} KB2H disponible auprès de Bayer,
- Polyéthersulfone (PES) : PES^{®} E3010 disponible auprès de BASF,
- Polysulfone PSU : Solvay Udel^{®} P-3500.

Les compositions de solvant(s) suivantes ont été préparées:
- DMSO = 100%,
- 2-pyrrolidone = 100%,
- DMSO/2-pyrrolidone = ratio massique 50/50, obtenue en mélangeant 45g de DMSO et 45g de 2-pyrrolidone,
- DMSO/2-pyrrolidone = ratio massique 20/80, obtenue en mélangeant 18g de DMSO et 72g de 2-pyrrolidone.

Les solutions polymériques ont ensuite été préparées par ajout du polymère à chaque composition de solvant(s). Elles présentent les proportions suivantes :
- solution de PU = 12,5% en poids de PU et 87.5% en poids de la composition de solvant(s), obtenue en ajoutant 12.86g de PU et 90g de composition de solvant(s),
- solution de PES = 15% en poids de PES et 85% en poids de la composition de solvant(s), obtenue en ajoutant 15.88g de PES et 90g de composition de solvant(s),
- solution de PSU = 10% en poids de PSU et 90% en poids de la composition de solvant(s), obtenue en ajoutant 10g de PSU et 90g de composition de solvant(s).

Les solutions de polymères de PES et de PU sont agitées et chauffées au bain-marie à 50°C jusqu'à dissolution totale. Une observation de stabilité à 0°C est ensuite effectuée durant 1 jour.

Les solutions de PSU sont agitées et chauffées au bain-marie à 70°C jusqu'à dissolution totale. Une observation de stabilité à basse température (0°C) est ensuite effectuée durant 3 semaines.

Les résultats sont présentés dans les tableaux ci-dessous.

**Tableau 1 : Evaluation de la solubilité à 50°C, temps de dissolution et aspect après retour à température ambiante (25°C) des solutions de polyéthersulfones**

| **PES** | | | |
|---|---|---|---|
| **Composition de solvant(s)** | **Solubilité à 50°C** | **Temps de dissolution** | **Aspect après retour à Température ambiante** |
| DMSO | Oui - liquide transparent orangé | 5h | Liquide transparent très légèrement jaune |
| 2-pyrrolidone | Oui - liquide transparent jaune | 24h | Liquide transparent jaune |
| DMSO/2-pyrrolidone 50/50 | Oui - liquide transparent jaune | 8h | Liquide transparent jaune |

**Tableau 2 : Evaluation de la stabilité des solutions de polyéthersulfones à basse température (0°C) au bout de 1 jour de stockage**

| **PES** | |
|---|---|
| **Composition de solvant(s)** | **Stabilité à basse température (0°C) après 1 jour de stockage** |
| DMSO | Solide |
| 2-pyrrolidone | Solide |
| DMSO/2-pyrrolidone 50/50 | Fluide |

La composition de solvant(s) utilisée selon l'invention permet d'améliorer la stabilité à basse température de solutions polymériques comprenant un polyéthersulfone tout en maintenant un aspect après retour à température ambiante satisfaisant.

**Tableau 3 : Evaluation de la solubilité à 50°C, temps de dissolution et aspect après retour à température ambiante (25°C) des solutions de polyuréthane (example de référence)**

| **PU** | | | |
|---|---|---|---|
| **Composition de solvant(s)** | **Solubilité à 50°C** | **Temps de dissolution** | **Aspect après retour à Température ambiante** |
| DMSO | OUI - liquide transparent jaune | 7h | Fluide transparent jaune |
| 2-pyrrolidone | OUI - liquide transparent incolore | 10h | Visqueux transparent incolore |
| DMSO/2-pyrrolidone 50/50 | OUI - liquide transparent incolore | 12h | Fluide transparent incolore |

**Tableau 4 : Evaluation de la stabilité des solutions de polyuréthane à basse température (0°C) au bout de 1 jour de stockage (example de référence)**

| **PU** | | |
|---|---|---|
| **Composition de solvant(s)** | **Stabilité à basse température (0°C) après 1 jour de stockage** | |
| DMSO | Solide | |
| 2-pyrrolidone | Solide | |
| DMSO/2-pyrrolidone 50/50 | Liquide visqueux | |

La composition de solvant(s) utilisée selon l'invention permet d'améliorer la stabilité à basse température de solutions polymériques comprenant un polyuréthane et d'obtenir un aspect amélioré après retour à température ambiante.

**Tableau 5 : Evaluation de la solubilité à 50°C, temps de dissolution et aspect après retour à température ambiante (25°C) des solutions de polysulfone**

| **PSU** | | | |
|---|---|---|---|
| **Composition de solvant(s)** | **Solubilité à 50°C** | **Temps de dissolution** | **Aspect après retour à Température ambiante** |
| DMSO | OUI - liquide trouble blanc | 10h | Gel en fond blanc liquide surnageant incolore |
| 2-pyrrolidone | OUI - liquide transparent incolore | 20h | Liquide transparent incolore |
| DMSO/2-pyrroli done 50/50 | OUI - liquide transparent incolore | 15h20 | Liquide transparent incolore |
| DMSO/2-pyrroli done 20/80 | Oui - liquide transparent incolore | 18h30 | Liquide transparent incolore |

**Tableau 6 : Evaluation de la stabilité des solutions de polysulfone à basse température (0°C) au bout de 1, 2 et 3 semaines de stockage**

| **PSU** | | | |
|---|---|---|---|
| **Composition de solvant(s)** | **Stabilité à basse température (0°C)** | | |
| | 1 semaine | 2 semaines | 3 semaines |
| DMSO | Solide | Solide | Solide |
| 2-pyrrolidone | Solide au bout de 1 heure | solide | solide |
| DMSO/2-pyrro lidone 50/50 | Fluide transparent incolore | Fluide transparent incolore | Fluide transparent incolore |
| DMSO/2-pyrro lidone 20/80 | Solide au bout de 4 heures | solide | solide |

Le tableau 6 montre que la solution de polysulfone utilisée selon l'invention est plus stable qu'une solution de polysulfone dans du DMSO seul ou dans du 2-pyrrolidone seul.

En particulier, les solutions de polysulfone comprenant une composition de solvant(s) comprenant du DMSO et de la 2-pyrrolidone dans un ratio 50/50 donnent d'excellents résultats en terme de stabilité à basse température et ceci sur une durée allant jusqu'à 3 semaines.

## Revendications

1. Utilisation d'une composition de solvant(s) pour améliorer la stabilité de solutions de polymères, dans laquelle la solution de polymères est une solution de polysulfone ou de polyéthersulfone ou de polyphénylsulfone, de préférence une solution de polysulfone,
la composition de solvant(s) comprenant un mélange d'au moins une molécule ayant au moins une fonction sulfoxyde et d'au moins une molécule ayant au moins une fonction amide où l'atome d'azote porte un atome d'hydrogène (-NH-C(O)-),
la molécule portant une fonction amide n'étant pas l'epsilon-caprolactame et ladite composition contenant une ou plusieurs polyéthersulfone(s), en quantité inférieure à 1% en poids, par rapport au poids total de la composition.

2. Utilisation d'une composition selon la revendication 1, dans laquelle la molécule portant la fonction amide est cyclique.

3. Utilisation d'une composition selon l'une des revendications 1 ou 2, dans laquelle la molécule portant une fonction sulfoxyde est le diméthylsulfoxyde.

4. Utilisation d'une composition selon l'une des revendications 1 à 3, dans laquelle la molécule portant une fonction amide est la 2-pyrrolidone.

5. Utilisation d'une composition selon l'une des revendications 1 à 4, dans laquelle la molécule portant une fonction sulfoxyde est le diméthylsulfoxyde et dans laquelle la molécule portant une fonction amide est la 2-pyrrolidone .

6. Utilisation d'une composition selon l'une des revendications 1 à 5, comprenant :
- de 21 à 75% en poids, de préférence de 25 à 70% en poids, de préférence encore de 30 à 65% en poids de la molécule portant une fonction sulfoxyde,
- de 25 à 80% en poids, de préférence de 30 à 75% en poids, de préférence encore de 35 à 70% en poids de la molécule portant une fonction amide où l'atome d'azote porte un atome d'hydrogène,
par rapport au poids total de la composition.

7. Utilisation d'une solution de polymère(s) pour la fabrication de cuirs artificiels, ladite solution de polymère(s) comprenant une composition de solvants comprenant un mélange d'au moins une molécule ayant au moins une fonction sulfoxyde et d'au moins une molécule ayant au moins une fonction amide où l'atome d'azote porte un atome d'hydrogène (-NH-C(O)-), ladite solution de polymère(s) contenant une ou plusieurs polyéthersulfone(s), en quantité inférieure à 1% en poids, par rapport au poids total de la composition.

8. Utilisation d'une solution de polymère(s) pour la fabrication de cuirs artificiels, selon la revendication 7, dans laquelle le polymère présente des fonctions sulfone ou uréthane.

9. Utilisation d'une solution de polymère(s) pour la fabrication de cuirs artificiels, selon la revendication 7 ou 8, dans laquelle la composition de solvant(s) est telle que définie dans l'une des revendications 2 à 6.

10. Utilisation d'une solution de polymère(s) pour la fabrication de cuirs artificiels, selon l'une des revendications 7 à 9, ladite solution polymère(s) comprenant :
- de 5 à 50% en poids, de préférence de 8 à 35% en poids de polymères, et
- de 50 à 95% en poids, de préférence de 65 à 92% en poids de la composition de solvant(s),
par rapport au poids total de la solution de polymères.

## Patentansprüche

1. Verwendung einer Lösungsmittelzusammensetzung zur Verbesserung der Stabilität von Polymerlösungen, wobei die Polymerlösung eine Lösung aus Polysulfon oder aus Polyethersulfon oder aus Polyphenylsulfon, bevorzugt eine Lösung aus Polysulfon, ist,
wobei die Lösungsmittelzusammensetzung ein Gemisch aus wenigstens einem Molekül mit wenigstens einer Sulfoxid-Funktion und aus wenigstens einem Molekül mit wenigstens einer Amid-Funktion umfasst, wo das Stickstoffatom ein Wasserstoffatom aufweist (-NH-C(O)-),
wobei das Molekül eine Amid-Funktion aufweist, die nicht epsilon-Caprolactam ist, und
wobei die Zusammensetzung ein oder mehrere Polyethersulfon(e), in einer Menge kleiner als 1 Gewichts-%, bezogen auf das Gesamtgewicht der Zusammensetzung, enthält.

2. Verwendung einer Zusammensetzung nach Anspruch 1, wobei das Molekül, das die Amid-Funktion aufweist, zyklisch ist.

3. Verwendung einer Zusammensetzung nach Anspruch 1 oder 2, wobei das Molekül, das eine Sulfoxid-Funktion aufweist, Dimethylsulfoxid ist.

4. Verwendung einer Zusammensetzung nach einem der Ansprüche 1 bis 3, wobei das Molekül, das eine Amid-Funktion aufweist, 2-Pyrrolidon ist.

5. Verwendung einer Zusammensetzung nach einem der Ansprüche 1 bis 4, wobei das Molekül, das eine Sulfoxid-Funktion aufweist, Dimethylsulfoxid ist, und wobei das Molekül, das eine Amid-Funktion aufweist, 2-Pyrrolidon ist.

6. Verwendung einer Zusammensetzung nach einem der Ansprüche 1 bis 5, umfassend:
- 21 bis 75 Gew.-%, bevorzugt 25 bis 70 Gew.-%, weiter bevorzugt 30 bis 65 Gew.-%, des Moleküls, das eine Sulfoxid-Funktion aufweist,
- 25 bis 80 Gew.-%, bevorzugt 30 bis 75 Gew.-%, weiter bevorzugt 35 bis 70 Gew.-%, des Moleküls, das eine Amid-Funktion aufweist, wo das Stickstoffatom ein Wasserstoffatom aufweist,
bezogen auf das Gesamtgewicht der Zusammensetzung.

7. Verwendung einer Polymerlösung zur Herstellung von Kunstledern, wobei die Polymerlösung eine Lösungsmittelzusammensetzung umfasst, die ein Gemisch aus wenigstens einem Molekül mit wenigstens einer Sulfoxid-Funktion und aus wenigstens einem Molekül mit wenigstens einer Amid-Funktion umfasst, wo das Stickstoffatom ein Wasserstoffatom aufweist (-NH-C(O)-), wobei die Polymerlösung ein oder mehrere Polyethersulfon(e), in einer Menge kleiner als 1 Gewichts-%, bezogen auf das Gesamtgewicht der Zusammensetzung, enthält.

8. Verwendung einer Polymerlösung zur Herstellung von Kunstledern nach Anspruch 7, wobei das Polymer Sulfon- oder Urethan-Funktionen aufweist.

9. Verwendung einer Polymerlösung zur Herstellung von Kunstledern nach Anspruch 7 oder 8, wobei die Lösungsmittelzusammensetzung wie in den Ansprüchen 2 bis 6 definiert ist.

10. Verwendung einer Lösungsmittelzusammensetzung zur Herstellung von Kunstledern nach einem der Ansprüche 7 bis 9, wobei die Polymerlösung umfasst:
- 5 bis 50 Gew.-%, bevorzugt 8 bis 35 Gew.-%, Polymere und
- 50 bis 95 Gew.-%, bevorzugt 65 bis 92 Gew.-%, der Lösungsmittelzusammensetzung,
bezogen auf das Gesamtgewicht der Polymerlösung.

## Claims

1. Use of a solvent composition to improve the stability of polymer solutions, wherein the polymer solution is a polysulphone, polyethersulphone or polyphenylsulphone solution, preferably a polysulphone solution,
the solvent composition comprising a mixture of at least one molecule having at least one sulphoxide function and at least one molecule having at least one amide function where the nitrogen atom carries a hydrogen atom (-NH-C(O)-),
the molecule carrying an amide function not being epsilon-caprolactam, and
said composition containing one or more polyethersulphones in an amount less than 1% by weight based on the total weight of the composition.

2. Use of a composition according to claim 1, wherein the molecule carrying the amide function is cyclic.

3. Use of a composition according to either claim 1 or claim 2, wherein the molecule carrying a sulphoxide function is dimethylsulphoxide.

4. Use of a composition according to any of claims 1 to 3, wherein the molecule carrying an amide function is 2-pyrrolidone.

5. Use of a composition according to any of claims 1 to **4,** wherein the molecule carrying a sulphoxide function is dimethylsulphoxide and wherein the molecule carrying an amide function is 2-pyrrolidone.

6. Use of a composition according to any of claims 1 to 5, comprising:
- 21 to 75% by weight, preferably 25 to 70% by weight, more preferably 30 to 65% by weight, of the molecule carrying a sulphoxide function,
- 25 to 80% by weight, preferably 30 to 75% by weight, more preferably 35 to 70% by weight, of the molecule carrying an amide function where the nitrogen atom carries a hydrogen atom,
based on the total weight of the composition.

7. Use of a polymer solution for producing artificial leathers, said polymer solution comprising a solvent composition comprising a mixture of at least one molecule having at least one sulphoxide function and at least one molecule having at least one amide function where the nitrogen atom carries a hydrogen atom (-NH-C(O)-), said polymer solution containing one or more polyethersulphones in an amount less than 1% by weight based on the total weight of the composition.

8. Use of a polymer solution for producing artificial leathers according to claim 7, wherein the polymer comprises sulphone or urethane functions.

9. Use of a polymer solution for producing artificial leathers according to claim 7 or 8, wherein the solvent composition is as defined in any of claims 2 to 6.

10. Use of a polymer solution for producing artificial leathers according to any of claims 7 to 9, said polymer solution comprising:
- 5 to 50% by weight, preferably 8 to 35% by weight, of polymers, and
- 50 to 95% by weight, preferably 65 to 92% by weight, of the solvent composition,
based on the total weight of the polymer solution.
